# EUROPEAN PATENT APPLICATION

(11) **EP 4 807 501 A1**
(43) Date of publication of application: **16.09.2026**
(21) Application number: 25224411.6
(22) Date of filing: 17.12.2025
(51) Int. Cl.: G06F 3/01, G06F 3/03, G06V 40/20

(54) **INTERACTION CONTROL METHOD, DEVICE, AND STORAGE MEDIUM**

(30) Priority: 13.03.2025 CN 202510300592
(71) Applicant: Beijing Zitiao Network Technology Co., Ltd., Beijing 100190 (CN)
(72) Inventor: ZHANG, Zhanchen, Beijing, 100028 (CN); MU, Rongxuan, Beijing, 100028 (CN); LIU, Chin-Wei, Beijing, 100028 (CN)
(74) Representative: Isarpatent

(57) **Abstract**

An interaction control method, a device, and a storage medium are provided. The method includes: acquiring target finger motion information of a user, where the target finger motion information includes a motion speed of a finger and/or a displacement of the finger (S110); determining target state change information of an object to be controlled according to the target finger motion information (S120); and adjusting a state of the object to be controlled according to the target state change information, where different finger motion information corresponds to different state change information (S130). In this way, energy consumption of the device during interaction is reduced, user operations are simplified, and precise control of the object to be controlled is achieved.

## Description

### TECHNICAL FIELD

Embodiments of the present disclosure relate to a technical field of human-computer interaction, and in particular, to an interaction control method, a device, and a storage medium.

### BACKGROUND

Extended reality (XR) is a general term for a variety of technologies, such as virtual reality (VR), augmented reality (AR), and mixed reality (MR). It may combine the real and the virtual through technologies such as visual interaction to create a human-computer interactive virtual environment, bringing users an "immersive experience" of seamless transition between the virtual and the reality world.

In some interaction methods, a user is often required to perform large movements with the whole hand or the arm to complete an interaction. Therefore, not only the physical burden on the users is increased, which easily leads to operational fatigue, but also the energy consumption of the XR device is increased.

### SUMMARY

The present disclosure provides an interaction control method and apparatus, a device, and a storage medium, which can reduce energy consumption of the device during interaction, simplify user operations, and achieve precise control of an object to be controlled.

At least one embodiment of the present disclosure provides an interaction control method, which includes: acquiring target finger motion information (e.g. first finger motion information) of a user, and the target finger motion information includes: a motion speed of a finger and/or a displacement of the finger; determining target state change information (e.g. first state change information) of an object to be controlled (e.g. first object) according to the target finger motion information; and adjusting a state of the object to be controlled according to the target state change information, where different finger motion information corresponds to different state change information.

At least one embodiment of the present disclosure provides an interaction control apparatus, which includes: a first acquisition module, configured to: acquire target finger motion information of a user, and the target finger motion information includes: a motion speed of a finger and/or a displacement of the finger; a first determination module, configured to: determine target state change information of an object to be controlled according to the target finger motion information; and a first adjustment module, configured to: adjust a state of the object to be controlled according to the target state change information, where different finger motion information corresponds to different state change information.

At least one embodiment of the present disclosure provides an electronic device, which includes: at least one processor and at least one memory, and the at least one memory is configured to store a computer program, and the at least one processor is configured to call and run the computer program stored in the memory to perform the method according to the at least one of the above embodiments.

At least one embodiment of the present disclosure provides a non-transitory computer-readable storage medium, configured to store a computer program, and the computer program causes a computer to perform the method according to at least one of the above embodiments.

At least one embodiment of the present disclosure provides a computer program product, which includes a computer program instruction, the computer program instruction causes a computer to perform the method according to at least one of the above embodiments.

At least one embodiment of the present disclosure provides a computer program, and the computer program causes a computer to perform the method according to at least one of the above embodiments.

### BRIEF DESCRIPTION OF DRAWINGS

In order to more clearly explain the technical solutions in the embodiments of the present disclosure, the drawings required to be used in the description of the embodiments will be briefly introduced below.
Fig. 1 is a flowchart of an interaction control method provided by an embodiment of the present disclosure;
Fig. 2 is a schematic diagram of an interaction control method provided by an embodiment of the present disclosure;
Fig. 3 is a schematic diagram of another interaction control method provided by an embodiment of the present disclosure;
Fig. 4 is a schematic diagram of yet another interaction control method provided by an embodiment of the present disclosure;
Fig. 5 is a schematic diagram of still another interaction control method provided by an embodiment of the present disclosure;
Fig. 6 is a schematic diagram of an interaction control apparatus 600 provided by an embodiment of the present disclosure; and
Fig. 7 is a schematic block diagram of an electronic device 700 provided by an embodiment of the present disclosure.

### DETAILED DESCRIPTION

The technical solutions in the embodiments of the present disclosure will be clearly and completely described below in conjunction with the drawings in the embodiments of the present disclosure. Obviously, the described embodiments are only part of the embodiments of the present disclosure, not all of them. Based on the embodiments in the present disclosure, all other embodiments obtained by those of ordinary skill in the art without creative work belong to the protection scope of the present disclosure.

It should be noted that the terms "first" and "second" in the description, claims, and drawings of the present disclosure are used to distinguish similar objects, and are not necessarily used to describe a specific order or sequence. It should be understood that the data used in this way may be interchanged under appropriate circumstances, so that the embodiments of the present disclosure described herein may be implemented in orders other than those illustrated or described herein. In addition, the terms "include" and "have" and any variations thereof are intended to cover non-exclusive inclusion. For example, a process, method, system, product or server that includes a series of steps or units is not necessarily limited to those steps or units that are clearly listed, but may include other steps or units that are not clearly listed or are inherent to these processes, methods, products or equipment.

As mentioned above, in the interaction methods in the related art, users are often required to perform large movements with the whole hand or the arm to complete an interaction. Therefore, not only the physical burden on the users is increased, which easily leads to operational fatigue, but also the energy consumption of the XR device is increased.

In order to solve the above technical problems, the inventive concept of the present disclosure is: to adjust a state of an object to be controlled accordingly according to specific finger motion information (including displacement and/or speed), where different finger motion information corresponds to different states of the object to be controlled, so as to reduce energy consumption of a device during an interaction, simplify user operations, and achieve precise control of the object to be controlled.

It should be understood that the technical solution of the present disclosure may be applied to the following scenarios, but is not limited to:
In an embodiment, the technical solution of the present disclosure may be used in a scenario of human-computer interaction based on hand movements of a user, and exemplarily, it may be applied to a scenario of controlling an object to be controlled in an interface according to finger movements of the user, which is not limited in the present disclosure.

Specifically, the technical solution of the present disclosure may be executed by a human-computer interaction apparatus. The human-computer interaction apparatus may be composed of hardware and/or software, and may be integrated in an electronic device. In the present disclosure, the electronic device may be any device that may provide a virtual scene function to a user, for example, the electronic device may be an XR device such as a VR headset; or, the electronic device may also be a computer, a mobile phone, a vehicle-mounted device, etc., and the type of the electronic device is not limited in the present disclosure.

Correspondingly, when the electronic device is a device that provides a virtual scene function, the electronic device may control an object to be controlled in a virtual scene according to the finger movements of the user, and the object to be controlled may be a virtual object in the virtual scene.

The virtual scene is a virtual scene displayed (or provided) when an application is running on the electronic device. The virtual scene may be a simulation environment of the real world, a semi-simulated and semi-fictional virtual scene, or a pure fictional virtual scene. The virtual scene may be any of a two-dimensional (2D) virtual scene, a 2.5-dimensional virtual scene, or a three-dimensional (3D) virtual scene, and the dimension of the virtual scene is not limited in the present disclosure.

For example, the virtual scene may include sky, land, ocean, etc., and the land may include environmental elements such as desert and city; or, the virtual scene may be a virtual interface, a virtual panel, a virtual page, or a virtual window of an application, which may specifically include a virtual object: a slider that controls the scrolling of the virtual interface or a virtual module in the virtual page that may slide left and right or up and down. The user may use the electronic device to control the virtual object to perform a position change operation (for example, moving, sliding, dragging, or scrolling) or a color change operation (for example, a change operation of hue, saturation, and brightness, etc.) in the virtual scene.

The virtual object refers to an object that interacts in the virtual scene, and is controlled by a user or a robot program (for example, a robot program based on artificial intelligence), and is an object that may be stationary, move, and perform various behaviors in the virtual scene, such as various characters in a game, and movable elements in a page (for example, a slider that controls page scrolling, and a module in the page that may slide left and right or up and down).

Correspondingly, when the electronic device is a device that does not provide a virtual scene function, the electronic device may control an object to be controlled in a real scene according to the finger movements of the user, and the object to be controlled may be a real object in the real scene.

For example, assuming that the electronic device is a desktop computer, the desktop computer may be integrated with a human-computer interaction apparatus, and the human-computer interaction apparatus may acquire the finger movements of the user through a camera; and then control the scrolling of the current interface on the display screen of the desktop computer or the movement or color change of a certain element currently displayed on the screen according to the finger movements, where the element or the interface is the object to be controlled.

After introducing the application scenarios of the embodiments of the present disclosure, the technical solution of the present disclosure will be described in detail below:

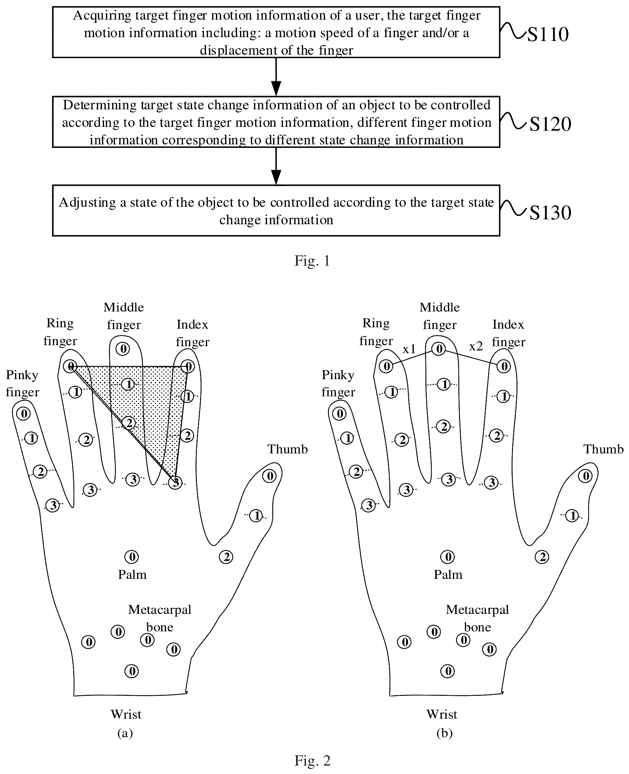

Fig. 1 is a flowchart of an interaction control method provided by an embodiment of the present disclosure, and the method may be executed by the human-computer interaction apparatus or the electronic device in the above application scenarios, but is not limited thereto. As shown in Fig. 1, the method may include the following steps:
S110: acquiring target finger motion information of a user, where the target finger motion information includes: a motion speed of a finger and/or a displacement of the finger;
S120: determining target state change information of an object to be controlled according to the target finger motion information, where different finger motion information corresponds to different state change information; and
S130: adjusting a state of the object to be controlled according to the target state change information.

It should be noted that in the following embodiments of the present disclosure, the technical solution of the present disclosure will be introduced by taking an example that the object to be controlled is a virtual object in a virtual scene and the electronic device is a headset among XR devices. **In** addition, reference may be made to this section for the content and methods corresponding to the case where the object to be controlled is an object in a real scene and the electronic device is other devices, which will not be repeated in the present disclosure to avoid redundancy.

**In** an embodiment, the user may wear the headset, and the headset may first acquire a hand image of the user through a camera, and determine a plurality of bone points corresponding to the hand of the user based on the hand image of the user; then, acquire motion information (a motion speed of the bone point and/or a displacement of the bone point) of the plurality of bone points by sensors such as an accelerometer and a gyroscope, and correspondingly determine the motion speed of the finger and/or the displacement of the finger according to the motion information of the plurality of bone points.

The bone point may also be understood as a joint point or a key point. For example, as shown in Fig. 2(a), the hand of the user includes 26 bone points in total. The index finger, the middle finger, the ring finger, and the pinky finger include four key points respectively, and the four key points are bone points 0-3 from the fingertip to the finger root, and the four bone points are located on the fingertip and three joint points of the finger. The thumb includes three key points, and the three key points are bone points 0-2 from the fingertip to the finger root, and are located on the fingertip and two joint points of the thumb. There is one bone point in the palm, which is numbered as bone point 0. There are four bone points at the metacarpal bone, all numbered as bone point 0. There is one bone point at the wrist, which is numbered as bone point 0.

Exemplarily, the headset may first determine a plurality of bone points of the hand of the user and a target bone point among the plurality of bone points; then, the headset may acquire bone point motion information of the target bone point relative to a plurality of other bone points other than the target bone point among the plurality of bone points, and the bone point motion information includes: a motion speed of the bone point and/or a displacement of the bone point, and the plurality of other bone points belong to at least one finger and/or a palm of the hand of the user; and finally, determine the bone point motion information as the target finger motion information.

The plurality of bone points may be the 26 bone points shown in Fig. 2, or may be part of the 26 bone points, for example, bone point 0 corresponding to the thumb, bone points 0 and 3 corresponding to the index finger, and bone point 0 corresponding to the ring finger. The target bone point may be any one bone point among the plurality of bone points. For example, the target bone point may be bone point 0 corresponding to the index finger, or may be bone point 0 corresponding to the thumb 0.

It should be noted that the method for determining the plurality of bone points and the target bone point and the method for determining the bone point motion information and the finger motion information are not limited in the present disclosure.

In the above process, the user does not need to perform large movements with the whole hand or the arm, instead, the interaction (for example, the interface scrolling operation in the XR environment) is realized through more natural and tiny finger movements (for example, slight contact and sliding between the thumb and other fingers), therefore, the gesture recognition and the sensor acquisition process can be simplified, the dependence of the device on high-energy-consumption sensing technologies can be reduced, the usage time of the device can be extended and the energy consumption can be reduced, the user operations can also be simplified, the interaction efficiency can be improved, and the muscle fatigue and joint pressure can be reduced.

Moreover, because the bone point is a specific point, and the corresponding motion information (displacement and/or speed) can accurately express the finger motion information (i.e., the displacement and/or speed of the finger), relatively accurate finger motion information can be determined through the bone point motion information, thereby the accuracy of state adjustment for the object to be controlled can be further improved.

Further, in the interaction process of using the fingers to control the object to be controlled, the intuitive operation of the user or a more efficient and concise operation mode is to use one finger to perform the interaction, and the above determining the target finger motion information according to the motion information (i.e., the bone point motion information) of the target bone point relative to the plurality of other bone points can realize the interaction using one finger (where the target bone point is a bone point corresponding to the one finger), therefore, the above process can also realize a more concise and efficient interaction mode that conforms to user intuition, and can improve the user experience and interaction efficiency.

According to the technical solution of the present disclosure, the electronic device may adjust the state of the object to be controlled only according to the finger motion information, thus avoiding user interaction fatigue and device energy consumption caused by performing large movements with the whole hand or the arm to complete an interaction, thereby simplifying user operations and reducing energy consumption of the device during the interaction. In addition, because different finger motion information (displacement and/or speed) corresponds to different state change information, that is, a specific change in the state of the object to be controlled is determined according to the specific displacement and/or speed of the finger, thereby enabling the achievement of precise control of the object to be controlled.

In the following embodiments, the process of determining the motion information of the target bone point relative to the plurality of other bone points, that is, the bone point motion information, is introduced:
In an embodiment, the headset may first construct a target plane according to the plurality of other bone points; then, determine, in the target plane (e.g. first plane), a target coordinate axis corresponding to the motion of the target bone point relative to the plurality of other bone points; then, the headset may acquire relative motion information of the target bone point relative to the target coordinate axis (e.g. first coordinate axis), and the relative motion information includes: a relative motion speed and/or a relative displacement of the target bone point relative to the target coordinate axis; and finally, determine the bone point motion information according to the relative motion information.

The target coordinate axis may be understood as a line corresponding to a motion trajectory generated by the motion of the target bone point relative to the plurality of other bone points. For example, assuming that the motion of the finger corresponding to the target bone point is sliding, the motion trajectory of the target bone point is a sliding trajectory, and the target coordinate axis may be a straight line corresponding to the sliding trajectory.

Exemplarily, a direction of the target coordinate axis is a direction of a connecting line between at least two bone points among the plurality of other bone points, and correspondingly, the target coordinate axis is a connecting line between at least two bone points among the plurality of other bone points.

Exemplarily, the target bone point may be a first bone point corresponding to a fingertip of the thumb, for example, bone point 0 corresponding to the thumb as shown in Fig. 2(a); the plurality of other bone points may include: a second bone point corresponding to a fingertip of the index finger (for example, bone point 0 corresponding to the index finger as shown in Fig. 2(a)), a fourth bone point corresponding to a finger root of the index finger (for example, bone point 3 corresponding to the index finger as shown in Fig. 2(a)), and a third bone point corresponding to a fingertip of the ring finger (for example, bone point 0 corresponding to the ring finger as shown in Fig. 2(a)).

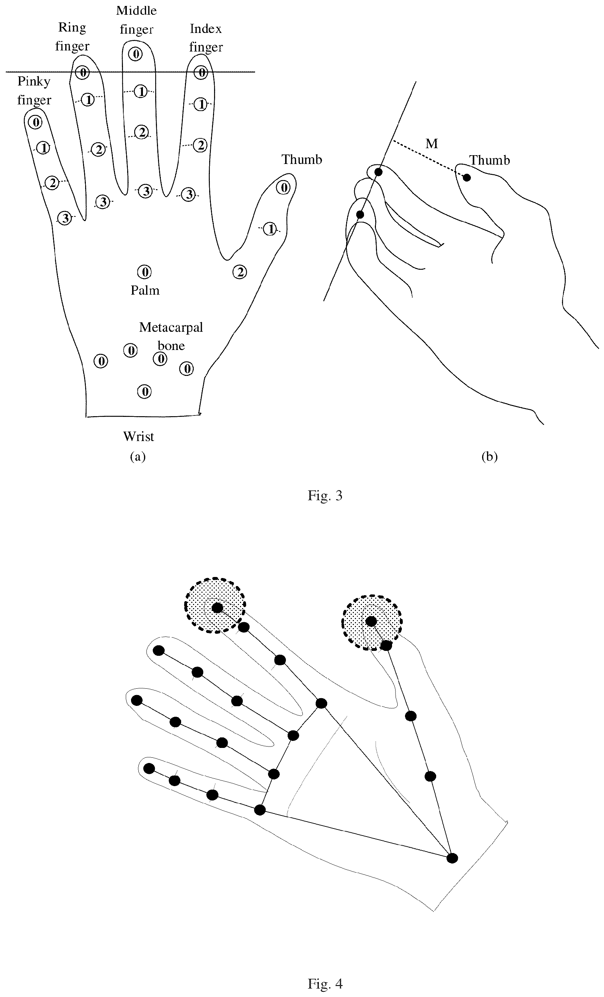

Then, correspondingly, in the process of controlling the state of the object to be controlled, an interaction gesture of the user may be as shown in Fig. 3(b). Four fingers other than the thumb are slightly bent and brought together, and are basically perpendicular to the thumb, and the state of the object to be controlled may be controlled/adjusted by the movement (e.g., sliding) of the thumb along the direction of a connecting line between at least two fingers among the four fingers or a connecting line between the fingers and the palm. The palm of the user may face upward, downward, leftward, or rightward or in any other direction.

Further, as shown in Fig. 2(a), a terminal device may perform line-connecting on the second bone point, the third bone point, and the fourth bone point to obtain a target plane, where the target plane includes the second bone point, the third bone point, and the fourth bone point. A direction of the target coordinate axis may be a direction of a connecting line between the second bone point and the third bone point. Specifically, as shown in Fig. 3(a), the target coordinate axis may be a connecting line between the second bone point and the third bone point.

In addition, considering the movement range of the fingers of the user, the headset may set the length of the target coordinate axis to be greater than a finger movement length threshold to ensure that the large movement of the fingers of the user may be acquired.

It should be noted that the above target bone point and the plurality of other bone points are only exemplary, and are not limited in the present disclosure.

In addition, exemplarily, the target bone point may also be a bone point corresponding to the fingertip of the index finger, for example, bone point 0 corresponding to the index finger as shown in Fig. 2(a); the plurality of other bone points may also include: a bone point corresponding to the fingertip of the thumb (for example, bone point 0 corresponding to the thumb as shown in Fig. 2(a)), a bone point corresponding to the fingertip of the pinky finger (for example, bone point 0 corresponding to the pinky finger as shown in Fig. 2(a)), and a bone point corresponding to the wrist (for example, bone point 0 corresponding to the wrist as shown in Fig. 2(a)). Correspondingly, the target plane may be a plane obtained by performing line-connecting on the bone point corresponding to the fingertip of the thumb, the bone point corresponding to the fingertip of the pinky finger, and the bone point corresponding to the wrist, and the target coordinate axis may be a connecting line perpendicular to a connecting line between the bone point corresponding to the fingertip of the thumb and the bone point corresponding to the fingertip of the pinky finger, or the target coordinate axis may be a connecting line between the bone point corresponding to the fingertip of the thumb and the bone point corresponding to the fingertip of the pinky finger.

In an embodiment, the above acquiring the relative displacement of the target bone point relative to the target coordinate axis may include: determining a first projection point of the target bone point on the target coordinate axis at the current moment and a second projection point of the target bone point on the target coordinate axis at the previous moment; and determining the relative displacement according to a distance and a direction between the first projection point and the second projection point. Specifically, the distance between the first projection point and the second projection point may be determined as a displacement size corresponding to the relative displacement, and the direction from the second projection point to the first projection point may be determined as the direction of the relative displacement. The distance between the first projection point and the second projection point may be determined by the difference between the position of the first projection point and the position of the second projection point.

Alternatively, the product of the time difference between the current moment and the previous moment and the relative motion speed may be determined as the relative displacement; still alternatively, the product of the time difference between the current frame and the previous frame and the relative motion speed may be determined as the relative displacement.

In an embodiment, the above acquiring the relative motion speed of the target bone point relative to the target coordinate axis may include: acquiring the relative motion speed by a camera or an inertial sensor such as an accelerometer and a gyroscope, but not limited thereto.

In addition, when acquiring the relative motion information of the target bone point relative to the target coordinate axis, a second filter may be used to smooth the relative motion information, so as to filter out variables caused by a hand jitter of the user and improve the accuracy of the data. The second filter is similar to the first filter in the following embodiments, and details are not repeated herein.

In an embodiment, the headset may determine the bone point motion information (the motion speed and/or displacement of the target bone point relative to the plurality of other bone points, that is, the motion speed of the bone point and/or the displacement of the bone point) according to the relative motion information (the motion speed and/or displacement of the target bone point relative to the target coordinate axis, that is, the relative motion speed and/or the relative displacement) by any of the following methods, but is not limited thereto.

Method 1: the headset may directly determine the relative motion information as the bone point motion information. That is, the motion speed of the target bone point relative to the target coordinate axis, that is, the relative motion speed, is directly determined as the motion speed of the target bone point relative to the plurality of other bone points, that is, the motion speed of the bone point; the displacement of the target bone point relative to the target coordinate axis, that is, the relative displacement, is directly determined as the displacement of the target bone point relative to the plurality of other bone points, that is, the displacement of the bone point.

Method 2: the headset may determine a first time interval between the current moment (that is, the moment of acquiring the relative motion information) and the previous moment (that is, the moment of acquiring the last relative motion information), or determine a second time interval between the current frame (that is, the hand image of the user corresponding to the acquisition of the relative motion information) and the previous frame (that is, the hand image of the user hand corresponding to the acquisition of the last relative motion information); then, the headset may only acquire the relative motion speed, and determine the product of the relative motion speed and the first time interval or the product of the relative motion speed and the second time interval as the displacement of the bone point. Alternatively, the headset may only acquire the relative displacement, and determine the ratio of the relative displacement to the first time interval or the ratio of the relative displacement to the second time interval as the motion speed of the bone point.

In an embodiment, before acquiring the target finger motion information of the user, the headset may further detect a gesture of the user, so as to acquire the target finger motion information and ensure the accuracy of the target finger motion information that is acquired.

Exemplarily, the headset may first detect whether the thumb of the hand of the user is perpendicular to the index finger and the ring finger of the hand of the user, and detect whether the intervals between the index finger and the middle finger of the hand of the user and between the ring finger and the middle finger of the hand of the user are both less than an interval threshold; then, the headset may acquire the target finger motion information in response to the thumb of the hand of the user being perpendicular to the index finger and the ring finger of the hand of the user, and the intervals between the index finger and the middle finger of the hand of the user and between the ring finger and the middle finger of the hand of the user being both less than the interval threshold.

The headset may photograph the hand of the user through the camera, and calculate the intervals between the index finger and the middle finger of the hand of the user and between the ring finger and the middle finger of the hand of the user according to the photographed hand image, so as to detect whether the intervals are greater than the interval threshold. For example, the intervals may be shown as x1 and x2 in Fig. 2(b).

Similarly, the direction pointed by the thumb and the direction of the connecting line between the index finger and the ring finger may also be determined by the photographed hand image, and whether the direction pointed by the thumb is perpendicular to the direction of the connecting line between the index finger and the ring finger may be determined. When the direction pointed by the thumb is perpendicular to the direction of the connecting line between the index finger and the ring finger, it may be determined that the thumb of the hand of the user is perpendicular to the index finger and the ring finger of the hand of the user; when the direction pointed by the thumb is not perpendicular to the direction of the connecting line between the index finger and the ring finger, it may be determined that the thumb of the hand of the user is not perpendicular to the index finger and the ring finger of the hand of the user.

In an embodiment, the finger motion corresponding to the target finger motion information may be sliding, which may specifically be horizontal or vertical scrolling, accelerated sliding (flinging), or dragging, which is not limited in the present disclosure. Correspondingly, adjusting the state of the object to be controlled may be adjusting a sliding state of the object to be controlled, that is, the sliding of the object to be controlled may be adjusted correspondingly according to the sliding of the finger.

For a pinch operation of the fingers, for example, as shown in Fig. 4, which may be a pinch operation between the fingertip of the thumb and the fingertip of the index finger, in order to avoid an operation conflict between the pinch operation and the sliding operation, that is, in order to distinguish the pinch operation from the sliding operation and accurately recognize intention of the user, the headset may first detect a target height (e.g. first height) of the target bone point from the target plane, and smooth the target height based on a first filter; then, the headset may adjust the sliding state of the object to be controlled according to the target state change information in response to the target height that is smoothed being greater than a finger pinch height threshold. When it is determined that the target height is less than or equal to the finger pinch height threshold, the headset may not respond to the sliding operation of the fingers of the user, that is, does not adjust the sliding state of the object to be controlled according to the target state change information, thereby preventing false triggering between gestures.

Exemplarily, the finger pinch height threshold may be 5 millimeters, but is not limited thereto.

Exemplarily, the above first filter may be a 1-ohm filter, and the 1-ohm filter is a filter that uses a resistor with a resistance value of 1 ohm to achieve a filtering effect, and has the characteristics of simple structure and easy implementation, and can filter out the hand jitter of the user and improve the accuracy of height detection.

Specifically, as shown in Fig. 3(b), the headset may project the target bone point (for example, the bone point corresponding to the fingertip of the thumb) onto the target coordinate axis (for example, the connecting line between the bone point corresponding to the fingertip of the index finger and the bone point corresponding to the fingertip of the ring finger ) to obtain a projection point; then, smooth the target bone point and the projection point by a filter, such as the 1-ohm filter; and determine the distance between the target bone point that is smoothed and the projection point that is smoothed as the target height of the target bone point from the target plane, as shown in Fig. 3(b) as M.

In the following embodiments, the target state change information and the adjustment of the state of the object to be controlled will be introduced.

In an embodiment, the target state change information of the object to be controlled may include at least one of the following, but is not limited thereto: change information of a position where the object to be controlled is located, color change information of the object to be controlled, shape change information of the object to be controlled, or sound change information of the object to be controlled. The shape change information may specifically be that the shape becomes larger or smaller, or may be that one shape becomes another shape, for example, a triangle becomes a rectangle; the sound change information may be change information of timbre, loudness, pitch, etc. Correspondingly, adjusting the state of the object to be controlled may be adjusting the position, color, shape, or sound of the object to be controlled. The color refers to hue, saturation, and brightness, the hue refers to the type of the color, such as red, green, etc., the saturation refers to the vividness of the color, and the brightness refers to the darkness and lightness of the color.

The target state change information may be a specific change value of the state change of the object to be controlled, or may be a specific value after the state change of the object to be controlled. For example, the change information of the position where the object to be controlled is located may specifically be a specific change value of the position change of the object to be controlled, or may be a specific value after the position change of the object to be controlled; the color change information may be a specific change value of the color change of the object to be controlled, or may be a specific value after the color change of the object to be controlled, which is not limited in the present disclosure.

In an embodiment, different finger motion information corresponds to different state change information.

For example, assuming that the finger motion information is: the motion speed of the finger is sliding 1 millimeter per millisecond in the left direction, then the state change information is: the position of the object to be controlled is moved left by 10 millimeter; assuming that the finger motion information is: the motion speed of the finger is sliding 2 millimeters per millisecond in the right direction, then the state change information is: the position of the object to be controlled is moved right by 20 millimeters.

For example, assuming that the finger motion information is: the displacement of the finger is a two-dimensional vector (0, 1), which may represent that the displacement of the thumb on the target coordinate axis is 1 and the displacement in the direction perpendicular to the target coordinate axis is 0, then the state change information is: the position of the object to be controlled is moved left by 10 millimeters; assuming that the finger motion information is: the displacement of the finger is a two-dimensional vector (0, -1), which may represent that the displacement of the thumb on the target coordinate axis is -1 and the displacement in the direction perpendicular to the target coordinate axis is 0, then the state change information is: the position of the object to be controlled is moved right by 20 millimeters.

For example, assuming that the finger motion information is: the displacement of the finger is a two-dimensional vector (0, 1) and the motion speed of the finger is sliding 1 millimeter per millisecond in the left direction, then the state change information is: the brightness of the object to be controlled is increased by 5 nits; assuming that the finger motion information is: the displacement of the finger is a two-dimensional vector (0, -1) and the motion speed of the finger is sliding 0.5 millimeters per millisecond in the right direction, then the state change information is: the brightness of the object to be controlled is decreased by 2.5 nits.

In an embodiment, the headset may pre-determine state change information corresponding to a plurality of types of finger motion information respectively to obtain a mapping relationship; then, after determining the target finger motion information, determine the state change information corresponding to the target finger motion information according to the mapping relationship to obtain the target state change information of the object to be controlled.

In another embodiment, after determining the target finger motion information, the headset may calculate the target state change information according to the target finger motion information.

Exemplarily, the headset may determine an increment of the target finger motion information relative to the finger motion information at the previous moment or the previous frame, that is, a finger motion increment; then, determine a position increment or a color increment corresponding to the finger motion increment; and determine the position increment or the color increment as the target state change information.

The position increment or the color increment refers to a value that the position or color of the object to be controlled needs to change, or a value of the position or color of the object to be controlled after the change. The value corresponding to the position increment or the color increment may be a value corresponding to the finger motion increment or a multiple of the value corresponding to the finger motion increment, or may be a value obtained by calculating the value corresponding to the finger motion increment using a target function, which is not limited in the present disclosure.

For example, assuming that the target finger motion information is: the displacement of the finger is a two-dimensional vector (0, 2), and the finger motion information at the previous moment or the previous frame is a two-dimensional vector (0, 1), then the finger motion increment is a two-dimensional vector (0, 1), then it may be determined that the value corresponding to the finger motion increment is 1, and when the value corresponding to the position increment is 10 times the value corresponding to the finger motion increment, then it may be determined that the target state change information is: the position of the object to be controlled is moved left by 10 millimeters.

Exemplarily, the headset may also directly determine the position increment or the color increment corresponding to the target finger motion information according to the target finger motion information; and determine the position increment or the color increment as the target state change information.

The value corresponding to the position increment or the color increment may be a value corresponding to the target finger motion information or a multiple of the value corresponding to the target finger motion information, or may be a value obtained by calculating the value corresponding to the target finger motion information using a target function, which is not limited in the present disclosure.

For example, assuming that the target finger motion information is: the displacement of the finger is a two-dimensional vector (0, 1), then it may be determined that the value corresponding to the target finger motion information is 1, and when the value corresponding to the position increment is 5 times the value corresponding to the target finger motion information, then it may be determined that the target state change information is: the position of the object to be controlled is moved left by 5 millimeters.

In addition, the change direction of the object to be controlled in the target state change information may be consistent with or correspond to the motion direction of the finger in the finger motion information, for example, the motion direction of the finger is left, then the change direction of the object to be controlled may be left, upward, or may be increase or decrease.

In an embodiment, the above adjustment of the state of the object to be controlled according to the target state change information may be: adjusting the state of the object to be controlled in real time according to the target state change information.

It should be noted that the method for determining the target state change information is not limited in the present disclosure.

In the above process, different finger motion information corresponds to different state change information, that is, the specific change in the state of the object to be controlled is determined according to the specific value, the change in the value, the direction, and the change direction of the displacement and/or speed of the finger, for example, the finger sliding 1 millimeter to the left corresponds to the object to be controlled moving 10 millimeters to the left, and the finger sliding 10 millimeters to the left corresponds to the object to be controlled moving 100 millimeters to the left, therefore, a precise process control technology (specifically, the process corresponding to adjusting the state of the object to be controlled) is realized, which not only ensures the fluency and accuracy of gesture operation, meets the application requirements of multiple scenarios, but also achieves precise control of the object to be controlled.

In an embodiment, before determining the target state change information of the object to be controlled according to the target finger motion information, the headset may further acquire a target motion state of the hand of the user, and the target motion state represents that the hand of the user stops moving or continues moving; correspondingly, the above determination of the target state change information of the object to be controlled according to the target finger motion information may include: determining a finger motion variation of the target finger motion information relative to the finger motion information at the previous moment in response to the target motion state representing that the hand of the user continues moving, and determining a state variation corresponding to the finger motion variation, for example, a position increment or a color increment, as the target state change information; or, determining a finger motion variation of the target finger motion information relative to the finger motion information at the previous moment in response to the target motion state representing that the hand of the user stops moving, determining state change speed decreasing information of the object to be controlled, and determining the target state change information according to the state change speed decreasing information and the state variation corresponding to the finger motion variation, for example, the position increment or the color increment.

The state change speed decreasing information may represent a degree to which the state change speed of the object to be controlled gradually slows down/attenuates, and the headset may adjust the state of the object to be controlled to a state corresponding to the state variation, for example, the position increment or the color increment, in a gradually attenuating form based on the state change speed decreasing information, thereby presenting an inertia effect when the hand of the user stops moving, and improving the user experience.

Exemplarily, the target motion state may be represented based on a Boolean value, for example, the Boolean value being true represents that the hand of the user continues moving, and the Boolean value being false represents that the hand of the user stops moving. Specifically, the headset may set up a finger motion event listener to listen to the motion state of the hand of the user based on the listener; the Boolean value may be determined to be true when the initial motion of the hand of the user is listened to, the Boolean value is maintained as true during the motion of the hand of the user, and the Boolean value is determined to be false when the hand of the user stops moving.

In an embodiment, before adjusting the state of the object to be controlled, the headset may first detect, by an interactor, whether the object to be controlled supports interface scrolling (scroll view); when it supports interface scrolling, the position of the virtual interface and/or the position of the slider in the virtual interface may be adjusted according to the target state change information, that is, control its sliding state.

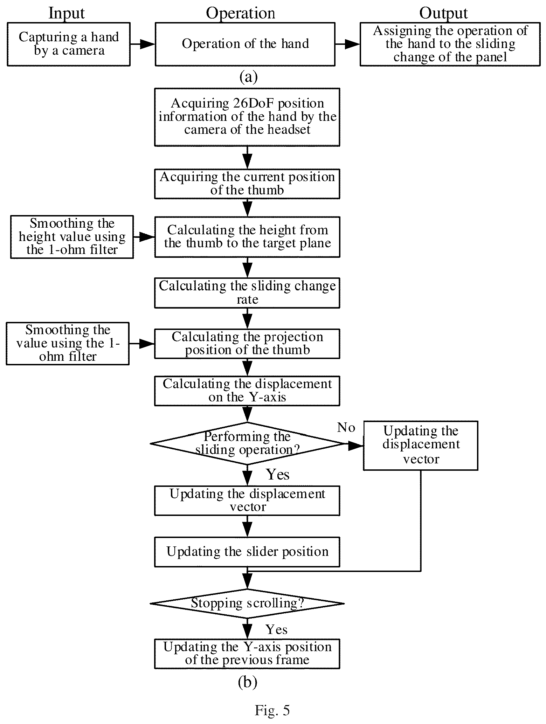

In an embodiment, as shown in Fig. 5(a), the technical solution of the present disclosure mainly involves three stages: the first stage is an input stage, that is, the headset may capture the hand of the user through the camera; the second stage is an operation stage, that is, the user performs a hand operation, and at the same time, the headset may capture the hand operation, that is, acquire the finger motion information corresponding to the hand operation of the user; the third stage is an output stage, that is, the headset assigns the hand operation to the state change of the object to be controlled, such as the sliding change of the panel, the volume change, etc.

Specifically, in combination with the above embodiment, as shown in Fig. 5(b), firstly, the headset may acquire 26Dof (degree of freedom) position information of the hand of the user through the camera, that is, the position information of the plurality of bone points of the hand; then, the current position of the thumb may be acquired, the height of the current position of the thumb from the target plane may be calculated, and the height may be smoothed using the 1-ohm filter to filter out the hand jitter of the user, and when the height is greater than the finger pinch height threshold, the following steps are executed. Calculate the sliding change rate of the fingertip of the thumb and the projection position of the fingertip of the thumb on the target plane, and use the 1-ohm filter to smooth the values corresponding to the rate, the projection position or the like to filter out the hand jitter of the user; then, calculate the displacement of the fingertip of the thumb relative to the Y-axis (i.e., the target coordinate axis in the target plane) through the projection position; then, determine whether to perform the sliding operation according to a set condition, where the set condition may be that the object to be controlled supports interface scrolling, and when it is determined not to perform the sliding operation, only update the displacement vector corresponding to the slider on the panel according to the above displacement and the sliding change rate, and do not actually scroll the slider; when it is determined to perform the sliding operation, update the displacement vector corresponding to the slider on the panel according to the above displacement and the sliding change rate and actually scroll the slider (move slider sphere); after that, when it is determined that the slider may stop scrolling, stop scrolling the slider, and update the Y-axis position of the previous frame, that is, the position of the above second projection point, to calculate the displacement of the thumb corresponding to the next sliding operation.

It should be noted that all the above technical solutions may be combined arbitrarily to form optional embodiments of the present disclosure, which will not be repeated here.

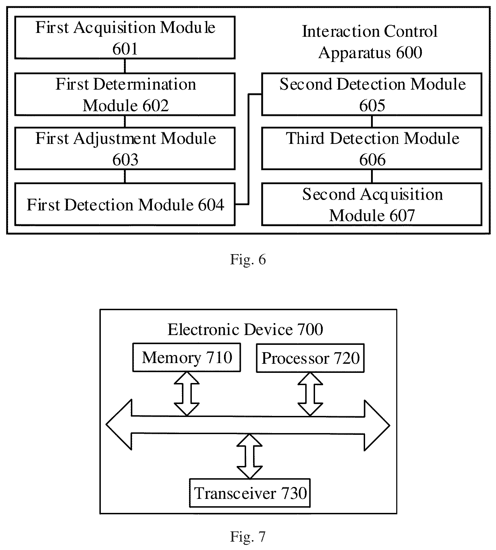

Fig. 6 is a schematic diagram of an interaction control apparatus 600 provided by an embodiment of the present disclosure. As shown in Fig. 6, the apparatus 600 includes: a first acquisition module 601, a first determination module 602, a first adjustment module 603, a first detection module 604, a second detection module 605, a third detection module 606, and a second acquisition module 607.

In an embodiment, the first acquisition module 601 is configured to: acquire target finger motion information of a user, and the target finger motion information includes: a motion speed of a finger and/or a displacement of the finger; the first determination module 602 is configured to: determine target state change information of an object to be controlled according to the target finger motion information; the first adjustment module 603 is configured to: adjust a state of the object to be controlled according to the target state change information, where different finger motion information corresponds to different state change information.

In an embodiment, the first acquisition module 601 is further configured to: determine a plurality of bone points of a hand of the user and a target bone point among the plurality of bone points; acquire bone point motion information of the target bone point relative to a plurality of other bone points other than the target bone point among the plurality of bone points, where the bone point motion information includes: a motion speed of the bone point and/or a displacement of the bone point, and the plurality of other bone points belong to at least one finger and/or a palm of the hand of the user; and determine the bone point motion information as the target finger motion information.

In an embodiment, the first acquisition module 601 is further configured to: construct a target plane according to the plurality of other bone points; determine, in the target plane, a target coordinate axis corresponding to the motion of the target bone point relative to the plurality of other bone points; acquire relative motion information of the target bone point relative to the target coordinate axis, and the relative motion information includes: a relative motion speed and/or a relative displacement of the target bone point relative to the target coordinate axis; and determine the bone point motion information according to the relative motion information.

In an embodiment, a direction of the target coordinate axis is a direction of a connecting line between at least two bone points among the plurality of other bone points.

In an embodiment, the target bone point is a first bone point corresponding to a fingertip of the thumb; and a direction of the target coordinate axis is a direction of a connecting line between a second bone point corresponding to a fingertip of the index finger and a third bone point corresponding to a fingertip of the ring finger.

In an embodiment, the first detection module 604 is configured to: detect whether the thumb of the hand of the user is perpendicular to the index finger and the ring finger of the hand of the user; the second detection module 605 is configured to: detect whether the intervals between the index finger and the middle finger of the hand of the user and between the ring finger and the middle finger of the hand of the user are both less than an interval threshold; the first acquisition module 601 is further configured to: acquire the target finger motion information in response to the thumb of the hand of the user being perpendicular to the index finger and the ring finger of the hand of the user, and the intervals between the index finger and the middle finger of the hand of the user and between the ring finger and the middle finger of the hand of the user being both less than the interval threshold.

In an embodiment, the third detection module 606 is configured to: detect a target height of the target bone point from the target plane based on a filter; and smooth the target height based on a first filter; the first adjustment module 603 is further configured to: adjust a sliding state of the object to be controlled according to the target state change information in response to the target height that is smoothed being greater than a finger pinch height threshold.

In an embodiment, the first acquisition module 601 is further configured to: determine a first projection point of the target bone point on the target coordinate axis at the current moment and a second projection point of the target bone point on the target coordinate axis at the previous moment; and determine the relative displacement according to a distance and a direction between the first projection point and the second projection point.

In an embodiment, the target state change information includes at least one of the following: change information of a position where the object to be controlled is located, color change information, shape change information, or sound change information.

In an embodiment, the second acquisition module 607 is configured to acquire a target motion state of the hand of the user, and the target motion state represents that the hand of the user stops moving or continues moving; the first determination module 602 is further configured to: determine a finger motion variation of the target finger motion information relative to the finger motion information at the previous moment in response to the target motion state representing that the hand of the user continues moving, and determine a state variation corresponding to the finger motion variation as the target state change information; or, determine the finger motion variation of the target finger motion information relative to the finger motion information at the previous moment in response to the target motion state representing that the hand of the user stops moving, determine state change speed decreasing information of the object to be controlled, and determine the target state change information according to the state change speed decreasing information and the state variation corresponding to the finger motion variation.

It should be understood that the apparatus embodiments may correspond to the method embodiments. For similar descriptions, reference may be made to the method embodiments. To avoid repetitions, details are not described herein again. Specifically, the apparatus 600 shown in Fig. 6 may execute the above method embodiments, and the foregoing and other operations and/or functions of the modules in the apparatus 600 are respectively intended to implement corresponding procedures of the above methods, which are not repeated herein for the sake of brevity.

The apparatus 600 of the embodiments of the present disclosure is described above with reference to the drawings from the perspective of a functional module. It should be understood that the functional module may be implemented in the form of hardware, or may be implemented by instructions in the form of software, or may be implemented by a combination of hardware and a software module. Specifically, the steps in the method embodiments of the embodiment of the present disclosure may be completed by a hardware integrated logic circuit in the processor and/or the instructions in the form of the software. Combined with the steps of the methods disclosed in the embodiments of the present disclosure, the implementation may be directly performed by a hardware decoding processor or by a combination of hardware and a software module in the decoding processor. Optionally, the software module may be located in a mature storage medium in the art, such as a random access memory, a flash memory, a read-only memory, a programmable read-only memory, an electrically erasable programmable memory, or a register. The storage medium is located in the memory and the processor reads information in the memory, completing the steps in the above method embodiments in combination with the hardware.

Fig. 7 is a schematic block diagram of an electronic device 700 provided by an embodiment of the present disclosure.

As shown in Fig. 7, the electronic device 700 may include:
at least one memory 710 and at least one processor 720. The memory 710 is configured to store a computer program, and transmit the program code to the processor 720. In other words, the processor 720 may call and run the computer program from the memory 710 to implement the methods in the embodiments of the present disclosure.

For example, the processor 720 may be configured to execute the above method embodiments according to the instructions in the computer program.

In some embodiments of the present disclosure, the processor 720 may include but not limited to:
a general-purpose processor, a digital signal processor (DSP), an application specific integrated circuit (ASIC), a field programmable gate array (FPGA) or other programmable logic devices, a discrete gate or transistor logic device, a discrete hardware component, etc.

In some embodiments of the present disclosure, the memory 710 includes but not limited to:
a volatile memory and/or a non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. By way of exemplary but not restrictive description, many forms of RAMs may be used, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch Link DRAM, SLDRAM), and a direct rambus random access memory (Direct Rambus RAM, DR RAM).

In some embodiments of the present disclosure, the computer program may be divided into one or more modules, and the one or more modules are stored in the memory 710 and executed by the processor 720 to complete the method provided by the present disclosure. The one or more modules may be a series of computer program instruction segments capable of completing specific functions, and the instruction segments are used to describe the execution process of the computer program in the electronic device.

As shown in Fig. 7, the electronic device may further include:
a transceiver 730, which may be connected to the processor 720 or the memory 710.

The processor 720 may control the transceiver 730 to communicate with other devices, specifically to send information or data to other devices or to receive information or data sent by other devices. The transceiver 730 may include a transmitter and a receiver. The transceiver 730 may further include an antenna, and the number of the antenna may be one or more.

It should be understood that the components of the electronic device are connected to each other through a bus system. In addition to a data bus, the bus system further includes a power bus, a control bus, and a status signal bus.

The present disclosure further provides a non-transitory computer storage medium having a computer program stored thereon, and the computer program, when executed by a computer, causes the computer to perform the methods of the above method embodiments. Alternatively, the embodiments of the present disclosure further provide a computer program product including an instruction, and the instruction, when executed by a computer, causes the computer to perform the methods of the above method embodiments.

When implemented using software, it may be implemented entirely or partially in the form of the computer program product. The computer program product includes one or more computer instructions. When the computer program instructions are loaded and executed on a computer, the computer may be caused to perform, entirely or partially, the corresponding procedures of the methods in the embodiments of the present disclosure, and generate the functions that may be implemented by the methods in the embodiments of the present disclosure. The computer may be a general-purpose computer, a dedicated computer, a computer network, or other programmable apparatus. The computer instructions may be stored in a computer-readable storage medium, or may be transmitted from one computer-readable storage medium to another computer-readable storage medium. For example, the computer instructions may be transmitted from one website, computer, server or data center to another website, computer, server or data center in a wired (for example, a coaxial cable, an optical fiber, a digital subscriber line (DSL)) or wireless (for example, infrared, radio, microwave, etc.) manner. The computer-readable storage medium may be any usable medium accessible by the computer, or a data storage device, such as a server or a data center, integrating one or more usable media. The usable medium may be a magnetic medium (for example, a floppy disk, a hard disk, a magnetic tape), an optical medium (for example, a digital video disc (DVD)), a semiconductor medium (for example, a solid state disk (SSD)), etc.

Those of ordinary skill in the art may realize that the modules and algorithm steps of various examples described in conjunction with the embodiments disclosed herein may be implemented in electronic hardware or a combination of computer software and electronic hardware. Whether these functions are performed in hardware or software depends on the specific application and design constraints of the technical solution. A person skilled in the art may implement the described functions by using different methods for each particular application, but such implementation should not be considered as going beyond the scope of the present disclosure.

In the several embodiments provided by the present disclosure, it should be understood that the disclosed system, apparatus, and method may be implemented in other ways. For example, the described apparatus embodiment is only schematic. For example, the module division is only a logical function division, and in actual implementation, there may be other division methods. For example, a plurality of modules or components may be combined or integrated into another system, or some features may be ignored or not implemented. On the other hand, the mutual coupling or direct coupling or communication connection as shown or discussed may be indirect coupling or communication connection through some interfaces, apparatuses or modules, which may be in electrical, mechanical or other forms.

The modules described as separate parts may be or may not be physically separated, and parts displayed as modules may be or may not be physical modules, that is, they may be located in one place or distributed to a plurality of network units. Some or all of the modules may be selected according to actual needs to achieve the purpose of the solutions of the embodiments. For example, functional modules in the embodiments of the present disclosure may be integrated into one processing module, each of the modules may exist physically alone, or two or more modules may be integrated into one module.

The above are only specific embodiments of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An interaction control method, comprising:
acquiring first finger motion information of a user, the first finger motion information comprising at least one selected from a group consisting of a motion speed of a finger and a displacement of the finger (S110);
determining first state change information of a first object according to the first finger motion information (S120); and
adjusting a state of the first object according to the first state change information (S130),
wherein different finger motion information corresponds to different state change information.

2. The method of claim 1, wherein acquiring the first finger motion information of the user comprises:
determining a plurality of bone points of a hand of the user and a target bone point among the plurality of bone points;
acquiring bone point motion information of the target bone point relative to a plurality of other bone points other than the target bone point among the plurality of bone points, the bone point motion information comprising at least one selected from a group consisting of a motion speed of a bone point and a displacement of the bone point, the plurality of other bone points belonging to at least one selected from a group consisting of at least one finger of the hand of the user and a palm of the hand of the user; and
determining the bone point motion information as the first finger motion information.

3. The method of claim 2, wherein acquiring the bone point motion information of the target bone point relative to the plurality of other bone points other than the target bone point among the plurality of bone points comprises:
constructing a first plane according to the plurality of other bone points;
determining, in the first plane, a first coordinate axis corresponding to a motion of the target bone point relative to the plurality of other bone points;
acquiring relative motion information of the target bone point relative to the first coordinate axis, the relative motion information comprising at least one selected from a group consisting of a relative motion speed of the target bone point relative to the first coordinate axis and a relative displacement of the target bone point relative to the first coordinate axis; and
determining the bone point motion information according to the relative motion information.

4. The method of claim 3, wherein a direction of the first coordinate axis is a direction of a connecting line between at least two bone points among the plurality of other bone points.

5. The method of claim 4, wherein the target bone point is a first bone point corresponding to a fingertip of a thumb; and
the direction of the first coordinate axis is a direction of a connecting line between a second bone point corresponding to a fingertip of an index finger and a third bone point corresponding to a fingertip of a ring finger.

6. The method of claim 5, wherein before acquiring the first finger motion information of the user, the method further comprises:
detecting whether a thumb of the hand of the user is perpendicular to an index finger and a ring finger of the hand of the user; and
detecting whether intervals between the index finger and a middle finger of the hand of the user and between the ring finger and the middle finger of the hand of the user are both less than an interval threshold,
wherein the acquiring the first finger motion information of the user comprises:
acquiring the first finger motion information in response to the thumb of the hand of the user being perpendicular to the index finger and the ring finger of the hand of the user, and the intervals between the index finger and the middle finger of the hand of the user and between the ring finger and the middle finger of the hand of the user being both less than the interval threshold.

7. The method of any one of claims 3-5, wherein before adjusting the state of the first object according to the first state change information, the method further comprises:
detecting a first height of the target bone point from the first plane; and
smoothing the first height based on a first filter,
wherein adjusting the state of the first object according to the first state change information comprises:
adjusting a sliding state of the first object according to the first state change information in response to the first height that is smoothed being greater than a finger pinch height threshold.

8. The method of any one of claims 3-5, wherein acquiring the relative motion information of the target bone point relative to the first coordinate axis comprises:
determining a first projection point of the target bone point on the first coordinate axis at a current moment and a second projection point of the target bone point on the first coordinate axis at a previous moment; and
determining the relative displacement according to a distance and a direction between the first projection point and the second projection point.

9. The method of any one of claims 1-8, wherein the first state change information comprises at least one of followings: change information of a position wherein the first object is located, color change information, shape change information, or sound change information.

10. The method of any one of claims 1-8, wherein before determining the first state change information of the first object according to the first finger motion information, the method further comprises:
acquiring a first motion state of a hand of the user, the first motion state representing that the hand of the user stops moving or continues moving, wherein
determining the first state change information of the first object according to the first finger motion information comprises:
determining a finger motion variation of the first finger motion information relative to finger motion information at a previous moment in response to the first motion state representing that the hand of the user continues moving, and determining a state variation corresponding to the finger motion variation as the first state change information; or
determining the finger motion variation of the first finger motion information relative to the finger motion information at the previous moment in response to the first motion state representing that the hand of the user stops moving, determining state change speed decreasing information of the first object, and determining the first state change information according to the state change speed decreasing information and the state variation corresponding to the finger motion variation.

11. An electronic device (700), comprising:
at least one processor (720); and
at least one memory (710), configured to store an executable instruction of the at least one processor (720),
wherein the at least one processor (720) is configured to execute the method of any one of claims 1-10 by executing the executable instruction.

12. A non-transitory computer-readable storage medium, storing a computer program thereon, wherein the computer program, when executed by a processor, implements the method of any one of claims 1-10.
